# EUROPÄISCHE PATENTSCHRIFT

(11) **EP 2 777 120 B1**
(45) Veröffentlichungstag und Bekanntmachung des Hinweises auf die Patenterteilung: **08.08.2018**
(21) Anmeldenummer: 12781068.7
(22) Anmeldetag: 26.10.2012
(51) Int. Cl.: H02J 3/32, H02J 3/28, G05F 1/66

(54) **VERFAHREN ZUR ERBRINGUNG VON REGELLEISTUNG UNTER VERWENDUNG VON ENERGIESPEICHERN**
METHOD FOR PROVIDING CONTROL POWER USING ENERGY STORES
PROCÉDÉ POUR FOURNIR UNE PUISSANCE DE RÉGULATION EN UTILISANT DES ACCUMULATEURS D'ÉNERGIE

(30) Priorität: 10.11.2011 DE 102011055250
(43) Veröffentlichungstag der Anmeldung: 17.09.2014
(73) Patentinhaber: Evonik Degussa GmbH, 45128 Essen (DE); Steag Power Saar GmbH, 66111 Saarbrücken (DE)
(72) Erfinder: MARKOWZ, Georg, 63755 Alzenau (DE); SCHWEISSTHAL, Wolfgang, 66399 Mandelbachtal (DE); KOLLIGS, Carsten, 46244 Bottrop (DE); BREZSKI, Holger, 35463 Fernwald (DE); IGEL, Michael, 66123 Saarbrücken (DE); FLEMMING, Anna, 60598 Frankfurt (DE); GAMRAD, Dennis, 46562 Voerde (DE); COCHET, Sébastien, 46149 Oberhausen (DE); WINTERNHEIMER, Stefan, 66113 Saarbrücken (DE); DEIS, Wolfgang, 69115 Heidelberg (DE)
(86) Internationale Anmeldenummer: PCT/EP2012/071250
(87) Internationale Veröffentlichungsnummer: WO 2013/068248

(56) Entgegenhaltungen:
- WO-A1-2006/072576
- WO-A2-2005/029667
- DE-A1- 4 215 550
- DE-A1- 19 516 838
- DE-A1- 19 600 289
- US-A- 4 894 764

## Beschreibung

Die vorliegende Erfindung betrifft ein Verfahren zur Erbringung von Regelleistung unter Verwendung von Energiespeichern sowie eine Vorrichtung zum Durchführen eines solchen Verfahrens.

Stromnetze werden verwendet, um Strom von meist mehreren Energieerzeugern in großen Gebieten auf viele Nutzer zu verteilen und Haushalte und Industrie mit Energie zu versorgen. Energieerzeuger meist in Form von Kraftwerken stellen dazu die benötigte Energie bereit. In der Regel wird die Stromerzeugung auf den prognostizierten Verbrauch hin geplant und bereitgestellt.

Sowohl beim Erzeugen als auch dem Verbrauchen von Energie kann es jedoch zu ungeplanten Schwankungen kommen. Diese können auf der Energieerzeugerseite beispielsweise dadurch entstehen, dass ein Kraftwerk oder ein Teil des Stromnetzes ausfällt oder zum Beispiel im Fall Erneuerbarer Energien wie Wind, dass die Energieerzeugung höher ausfällt als prognostiziert. Auch bezüglich der Verbraucher kann es zu unerwartet hohen oder niedrigen Verbräuchen kommen. Der Ausfall eines Teils des Stromnetzes beispielsweise, der einige Verbraucher von der Energieversorgung abschneidet, kann zu einer plötzlichen Reduzierung des Stromverbrauchs führen.

Dies führt im Allgemeinen dazu, dass es in Stromnetzen durch ungeplante und/oder kurzfristige Abweichungen von Leistungserzeugung und/oder -verbrauch zu Schwankungen der Netzfrequenz kommt. Die gewünschte Wechselstromfrequenz beträgt beispielsweise in Europa 50 Hz. Eine Verringerung des Verbrauchs gegenüber dem Plan führt zu einer Erhöhung der Frequenz bei planmäßig eingespeister Leistung durch die Energieerzeuger, gleiches gilt für eine Erhöhung der Stromproduktion gegenüber dem Plan bei planmäßigem Verbrauch. Eine Verringerung der Leistung der Energieerzeuger gegenüber dem Plan führt dagegen zu einer Verringerung der Netzfrequenz bei plangemäßem Verbrauch, gleiches gilt für eine Erhöhung des Verbrauchs gegenüber dem Plan bei plangemäßer Erzeugung.

Aus Gründen der Netzstabilität ist es erforderlich, diese Abweichungen in einem definierten Rahmen zu halten. Dazu muss je nach Höhe und Richtung der Abweichung gezielt positive Regelleistung durch Zuschalten von zusätzlichen Erzeugern oder Abschalten von Verbrauchern oder negative Regelleistung durch Abschalten von Erzeugern oder Hinzuschalten von Verbrauchern bereitgestellt werden. Es besteht allgemein der Bedarf an einer wirtschaftlichen und effizienten Bereitstellung dieser Regelleistungen, wobei die Anforderungen an die bereitzuhaltenden Kapazitäten und die Dynamik der Regelleistungsquellen beziehungsweise -senken je nach Charakteristik des Stromnetzes variieren können.

In Europa gibt es beispielsweise ein Regelwerk (UCTE Handbook), dass drei verschiedene Kategorien an Regelleistung beschreibt. Darin sind auch die jeweiligen Anforderungen and die Regelleistungsarten festgelegt. Die Regelleistungsarten unterscheiden sich unter anderem in den Anforderungen an die Dynamik und die Dauer der Leistungserbringung. Außerdem werden sie unterschiedlich hinsichtlich der Randbedingungen eingesetzt. Primärregelleistung (PRL) ist unabhängig vom Ort der Verursachung der Störung europaweit von allen eingebundenen Quellen zu erbringen, und zwar im Wesentlichen proportional zur aktuellen Frequenzabweichung. Die absolut maximale Leistung ist bei Frequenzabweichungen von minus 200 mHz und (absolut) darunter zu erbringen, die absolut minimale Leistung ist bei Frequenzabweichungen von plus 200 mHz und darüber zu erbringen. Hinsichtlich der Dynamik gilt, dass aus dem Ruhezustand die jeweils (betragsmäßig) maximale Leistung innerhalb von 30 Sekunden bereitgestellt werden muss. Demgegenüber sind Sekundärregelleistung (SRL) und Minutenreserveleistung (MRL) in den Bilanzräumen zu erbringen, in denen die Störung aufgetreten ist. Ihre Aufgabe ist es, die Störung möglichst schnell zu kompensieren und somit dafür zu sorgen, dass die Frequenz wieder möglichst schnell, vorzugsweise spätestens nach 15 Minuten wieder im Sollbereich liegt. Hinsichtlich der Dynamik werden an die SRL und die MRL geringere Anforderungen gestellt (5 bzw. 15 Minuten bis zur vollen Leistungserbringung nach Aktivierung), gleichzeitig sind diese Leistungen auch über längere Zeiträume bereitzustellen als Primärregelleistung.

In den bisher betriebenen Stromnetzen wird ein Großteil der Regelleistung von konventionellen Kraftwerken, insbesondere Kohle- und Atomkraftwerken bereitgestellt. Zwei grundsätzliche Problemstellungen resultieren hieraus. Zum einen werden die konventionellen, Regelleistung bereitstellenden Kraftwerke nicht bei Volllast und damit maximalen Wirkungsgraden, sondern leicht unterhalb derselben betrieben, um bei Bedarf positive Regelleistung bereitstellen zu können, ggfs. über einen theoretisch unbegrenzten Zeitraum. Zum anderen sind mit zunehmendem Ausbau und zunehmender bevorzugter Nutzung der Erneuerbaren Energien immer weniger konventionelle Kraftwerke in Betrieb, was aber oftmals die Grundvoraussetzung für die Erbringung von Regelleistungen ist.

Aus diesem Grund wurden Ansätze entwickelt, vermehrt Speicher einzusetzen, um negative Regelenergie zu speichern und bei Bedarf als positive Regelenergie bereitzustellen.

Der Einsatz von Hydro-Pumpspeicherwerken zur Erbringung von Regelleistung ist Stand der Technik. In Europa werden alle oben genannten drei Regelleistungsarten von Pumpspeichern erbracht. Hydropumpspeicher werden jedoch auch immer wieder genannt als gegenwärtig wirtschaftlichste Technologie zur Ein- und Ausspeicherung von bevorzugt Erneuerbaren Energien, um Energieangebot und -bedarf zeitlich besser aufeinander anpassen zu können. Das Potenzial zum Ausbau der Speicherkapazitäten - insbesondere in Norwegen - wird kontrovers diskutiert, da für die Nutzung beträchtliche Kapazitäten in Stromleitungen genehmigt und installiert werden müssen. Folglich steht die Nutzung für das energiewirtschaftliche Lastmanagement in Konkurrenz zur Bereitstellung von Regelleistung.

Vor diesem Hintergrund wurden im Bereich der Primärregelleistung in der jüngeren Vergangenheit immer wieder Ansätze untersucht und beschrieben, auch andere Speichertechnologien wie beispielsweise Schwungmassen- und Batteriespeicher für die Bereitstellung von Regelleistung einzusetzen.

Aus der US 2006/122738 A1 ist ein Energiemanagementsystem bekannt, dass einen Energieerzeuger und einen Energiespeicher umfasst, wobei der Energiespeicher durch den Energieerzeuger aufladbar ist. Dadurch soll ein Energieerzeuger, der im normalen Betrieb keine gleichmäßige Energieerzeugung gewährleistet, wie zum Beispiel die zunehmend favorisierten erneuerbaren Energien, wie Windkraft- oder Photovoltaikkraftwerke, in die Lage versetzt werden, ihre Energie gleichmäßiger ins Stromnetz abzugeben. Nachteilig ist hieran, dass hierdurch zwar ein einzelnes Kraftwerk stabilisiert werden kann, alle anderen Störungen und Schwankungen des Stromnetzes aber nicht oder nur sehr begrenzt abgefangen werden können.

Es ist aus der WO 2010 042 190 A2 und der JP 2008 178 215 A bekannt, Energiespeicher zur Bereitstellung von positiver und negativer Regelleistung zu verwenden. Wenn die Netzfrequenz einen Toleranzbereich um die gewünschte Netzfrequenz verlässt, wird entweder Energie aus dem Energiespeicher bereitgestellt oder in den Energiespeicher aufgenommen, um die Netzfrequenz zu regulieren. Auch die DE 10 2008 046 747 A1 schlägt vor, einen Energiespeicher in einem Inselstromnetz derart zu betreiben, dass der Energiespeicher zur Kompensation von Verbrauchsspitzen und Verbrauchsminima eingesetzt wird. Nachteilig ist hieran, dass die Energiespeicher nicht die notwendige Kapazität haben, um eine längere Störung oder mehrere, hinsichtlich der Frequenzabweichung gleichgerichtete Störungen hintereinander zu kompensieren.

Die Druckschriften DE 42 15 550 A1, US 4,894,764, WO 2005/029667 A2, DE 196 00 289 A1, DE195 16 838 A1 sowie WO2006/072576 A1 behandeln ebenfalls die Erbringung von Regelleistung im elektrischen Energieverteilungsnetz durch einen Energiespeicher, dem über eine separate Einrichtung Energie zugeführt bzw. entnommen werden kann. Keines der Dokumente erkennt jedoch den Vorteil, der sich durch Zusammenwirken mit dem Speicher ergibt, wenn die Einrichtung selbst zur Regelleistungserbringung herangezogen wird. In dem Artikel "Optimizing a Battery Energy Storage System for Primary Frequency Control" von Oudalov et al., in IEEE Transactions on Power Systems, Vol. 22, No. 3, August 2007, wird die Kapazität eines Akkumulators von technischen und betrieblichen Randbedingungen bestimmt, damit dieser nach den europäischen Normen (UCTE Handbook) Primärregelleistung bereitstellen kann. Es zeigt sich, dass auf Grund der Ein- und Ausspeicherverluste langfristig in unterschiedlichen Zeitabständen immer wieder ein Aufladen oder Entladen des Speichers unvermeidbar ist. Die Autoren schlagen dazu die Zeiträume vor, in denen sich die Frequenz im Totband (d.h. in dem Frequenzbereich, in dem keine Regelleistung zu erbringen ist) befindet. Trotzdem kann es kurzfristig bzw. vorübergehend dazu kommen, dass der Speicher überladen wird. Die Autoren schlagen für solche Fälle den (begrenzten Einsatz) von Verlust erzeugenden Widerständen vor, die extremal die komplette negative Nenn-Regelleistung aufnehmen, also hierauf ausgelegt werden müssen. Neben dem zusätzlichen Investitionsbedarf für die Widerstände und deren Kühlung führt dies jedoch, wie von den Autoren selbst schon genannt, zu einer mehr oder weniger unerwünschten Energievernichtung, wobei die entstehende Abwärme in der Regel nicht genutzt werden kann. Die Autoren zeigen auf, dass eine geringere Inanspruchnahme der Verlusterzeugung nur durch eine höhere Speicherkapazität, verbunden mit höheren Investitionskosten, möglich ist.

In Anbetracht des Standes der Technik ist es nun Aufgabe der vorliegenden Erfindung ein technisch verbessertes Verfahren zur Erbringung von Regelleistung zur Stabilisierung eines Wechselstromnetzes zur Verfügung zu stellen, das nicht mit den Nachteilen herkömmlicher Verfahren behaftet ist.

Insbesondere sollte das Verfahren möglichst einfach und kostengünstig durchgeführt werden können. Hierbei sollten die Anlagen, mit denen das Verfahren durchgeführt werden kann, in Bezug auf die bereitgestellte Regelleistung mit möglichst geringen Investitionen verbunden sein.

Hierbei soll es ermöglicht werden Regelleistung bei einem hohen Wirkungsgrad der eingesetzten Komponenten bereitzustellen.

Eine weitere Aufgabe der Erfindung ist darin zu sehen, dass die Kapazität des Energiespeichers möglichst gering sein soll, um die erforderliche Regelleistung bereitzustellen.

Ferner sollen die Energieerzeuger und Energieverbraucher eine möglichst effiziente Energieausbeute als Regelleistunglieferanten aufweisen.

Das erfindungsgemäße Verfahren soll außerdem dazu geeignet sein, die notwendige Regelleistung bei Bedarf möglichst schnell bereitstellen zu können.

Darüber hinaus sollte das Verfahren mit möglichst wenigen Verfahrensschritten durchgeführt werden können, wobei dieselben einfach und reproduzierbar sein sollten.

Weitere nicht explizit genannte Aufgaben ergeben sich aus dem Gesamtzusammenhang der nachfolgenden Beschreibung und der Ansprüche.

Gelöst werden diese sowie weitere nicht explizit genannte Aufgaben, die jedoch aus den hierin einleitend diskutierten Zusammenhängen ohne weiteres ableitbar oder erschließbar sind, durch ein Verfahren mit allen Merkmalen des Patentanspruchs 1. Zweckmäßige Abwandlungen des erfindungsgemäßen Verfahren zur Bereitstellung von Regelleistung für ein Stromnetz bei dem Regelleistung bereitgestellt wird, werden in den Unteransprüchen 2 bis 9 unter Schutz gestellt. Ferner hat Patentanspruch 10 eine Vorrichtung zum Durchführen eines solchen Verfahrens zum Gegenstand.

Gegenstand der vorliegenden Erfindung ist dementsprechend ein Verfahren zur Erbringung von Regelleistung zur Stabilisierung eines Wechselstromnetzes, wobei das Wechselstromnetz bei einer Vorgabefrequenz arbeitet, umfassend einen Energiespeicher, der elektrische Energie aufnehmen und abgeben kann, welches dadurch gekennzeichnet ist, dass der Energiespeicher mit mindestens einer Einheit zum Be- und/oder Entladen des Energiespeichers verbunden ist, wobei die Einheit zum Be- und/oder Entladen des Energiespeichers dem Energiespeicher Energie mit einer Leistung von höchstens kleiner oder gleich 20 % der kontrahierten Höchstleistung des Energiespeichers entzieht oder zuführt.

Durch das erfindungsgemäße Verfahren gelingt es auf nicht vorhersehbare Weise ein Verfahren zur Erbringung von Regelleistung zur Stabilisierung eines Wechselstromnetzes bereitzustellen, das nicht mit den Nachteilen herkömmlicher Verfahren behaftet ist.

Insbesondere ermöglicht die vorliegende Erfindung Regelleistung bei einem hohen Wirkungsgrad der eingesetzten Komponenten bereitzustellen.

Weiterhin kann die Kapazität des Energiespeichers sehr gering gehalten werden, um eine erforderliche Regelleistung bereitzustellen.

Ferner weisen die Energieerzeuger und Energieverbraucher eine sehr effiziente Energieausbeute auf, die beispielsweise als Einheiten zum Be- und/oder Entladen des Energiespeichers und/oder als Regelenergielieferanten eingesetzt werden können.

Das erfindungsgemäße Verfahren ist außerdem dazu geeignet, die notwendige Regelleistung sehr schnell bereitzustellen.

Insbesondere kann das Verfahren möglichst einfach und kostengünstig durchgeführt werden, da die für die volle Verfügbarkeit erforderliche Speicherkapazität verringert werden kann.

Gemäß dem Stand der Technik werden die Energiespeicher im Allgemeinen über das Stromnetz be- bzw. entladen. Diese Vorgehensweise kann auch weiterhin beibehalten werden, wobei diese über das Stromnetz durchzuführenden Lade-/Entladezyklen aufgrund der Erfindung seltener oder gar nicht durchgeführt werden müssen. Hierbei ist festzuhalten, dass der Energiespeicher über das Stromnetz durch Energiehandel Energie beziehen kann. Diese Energie muss eingekauft und zu einem spezifischen Zeitpunkt abgerufen werden, da andernfalls eine Störung des Systems vorliegt. Die tatsächliche Netzfrequenz ist für diesen Vorgang unerheblich, da bei einer geplanten, gleichzeitigen Einspeisung und Entnahme einer Leistung die Frequenz des Stromnetzes nicht beeinflusst wird. Wichtig ist vielmehr, dass die Einspeisung und die Entnahme dieser Leistung möglichst synchron erfolgen. Bei einer konstanten Kapazität des Energiespeichers kann in Folge einer Verminderung der bei einer hohen Leistung durchgeführten Lade-/Entladezyklen die betriebliche Lebensdauer des Speichers vergrößert werden, wobei dies insbesondere für Akkumulatoren ein wichtiger Gesichtspunkt darstellt, der durch die vorliegende Erfindung überraschend verbessert werden kann.

Weiterhin kann aufgrund der zusätzlich bereitstellbaren Leistung der Einheit zum Be- und/oder Entladen des Energiespeichers selbst bei einer hohen Belastung des Energiespeichers aufgrund einer längerfristigen einseitigen Frequenzabweichung die Zeit bis zum Durchführen einer Einspeisung oder Entnahme von Energie mittels des Stromnetzes vergrößert werden, so dass die Kapazität entsprechend verringert werden kann.

Darüber hinaus kann das Verfahren mit sehr wenigen Verfahrensschritten durchgeführt werden, wobei dieselben einfach und reproduzierbar sind.

Das vorliegende Verfahren dient zur Bereitstellung von Regelleistung zur Stabilisierung eines Wechselstromnetzes. Wie in der Einleitung bereits dargelegt, verändert sich in einem Wechselstromnetz die Frequenz, falls das Gleichgewicht zwischen Energieverbrauch und Energiebereitstellung nicht eingehalten wird.

Die Regelenergie oder Regelleistung wird an das Stromnetz abgegeben (positive Regelenergie oder positive Regelleistung) oder aus dem Stromnetz aufgenommen (negative Regelenergie oder negative Regelleistung). Positive Regelleistung kann durch Energieeinspeisung, beispielsweise Energieeintrag eines Energiespeichers oder durch Zuschalten eines Kraftwerks, oder durch Drosselung eines Verbrauchers in das Netz zugeführt werden. Negative Regelleistung kann dem Netz durch Energieaufnahme eines Energiespeichers, Drosselung einer Energiequelle, beispielsweise eines Kraftwerks, oder durch Zuschalten eines Verbrauchers in das Netz eingespeist werden. Weitere wichtige Informationen hierzu finden sich im Stand der Technik, wobei insbesondere auf die in der Einleitung diskutierten Dokumente Bezug genommen wird. In diesem Zusammenhang ist festzuhalten, dass die Begriffe Regelleistung und Regelenergie einen ähnlichen Bedeutungsgehalt aufweisen.

Üblich wird Regelleistung für eine bestimmte Nennleistung vom Anbieter dem Netzbetreiber zur Verfügung gestellt. Unter der Nennleistung ist vorliegend die Leistung zu verstehen, mit der die Regelenergiequelle mindestens präqualifiziert ist, die mit einem erfindungsgemäßen Verfahren betrieben wird. Im Allgemeinen überprüft der Netzbetreiber die vom Anbieter behauptete Fähigkeit zur Erbringung von Regelleistung durch ein Präqualifikationsverfahren. Allerdings kann die Präqualifikationsleistung höher sein, als die Nennleistung, die dem Netzbetreiber maximal zur Verfügung gestellt wird. Diese Nennleistung kann auch als kontrahierte Höchstleistung bezeichnet werden, da diese Leistung dem Netz maximal bereitgestellt wird.

Das erfindungsgemäße Verfahren dient zur Stabilisierung eines Wechselstromnetzes. Wechselstromnetze zeichnen sich durch eine Änderung der Polung des elektrischen Stromes aus, wobei sich positive und negative Augenblickswerte so ergänzen, dass der Strom im zeitlichen Mittel null ist. Diese Netze werden im Allgemeinen zur Übertragung von elektrischer Energie eingesetzt.

Üblich werden die Wechselstromnetze mit einer Vorgabefrequenz betrieben, die in Europa, insbesondere in Deutschland, bei 50 Hz liegt. Im nordamerikanischen Raum beträgt die Vorgabefrequenz hingegen 60 Hz. Diese Vorgabefrequenz wird vielfach auch als Sollfrequenz bezeichnet.

Um diese Vorgabefrequenz werden vom Netzbetreiber üblich Frequenzbänder definiert, außerhalb derer positive oder negative Regelleistung in das Netz eingespeist werden muss. Genaue Angaben hierzu finden sich in europäischen Normen (Handbook), die die zum Betreiben des europäischen Verbundsystems UCTE (Union for the Co-ordination of Transmission of Electricity) erarbeitet wurden und in nationalen Richtlinien (z.B. Transmission Code für Deutschland) umgesetzt werden.

Gegenwärtig gibt es für die Quellen zur Bereitstellung von Primärregelleistung zwei Toleranzen, die hinsichtlich der Frequenzabweichungen relevant sind. Zum einen ist dies die Frequenzmessgenauigkeit. Diese darf maximal +/- 10 mHz betragen. Zudem gibt es einen sogenannten Unempfindlichkeitsbereich von maximal +/- 10 mHz, der den Primärregelleistung erbringenden Quellen zugestanden wird. Um ein Agieren der Regelleistungsquellen entgegen der erwünschten Richtung in jedem Fall zu vermeiden, haben die Übertragungsnetzbetreiber in Deutschland in ihren Rahmenverträgen beispielsweise ein Band von +/- 10 mHz um den Sollwert von 50 Hz festgelegt, in dem keine Primärregelleistung zu erbringen ist. Selbst bei maximaler Frequenzmessgenauigkeit von + 10 mHz oder - 10 mHz ist so ein Erbringen von Regelleistung entgegen der erwünschten Richtung ausgeschlossen. Außerhalb dieser Grenzen muss gemäß den Vertragsbedingungen Regelleistung bereitgestellt werden. Die Bandbreite dieses Frequenzbandes ist für die vorliegende Erfindung nicht kritisch und kann demgemäß an die Vorgaben der Netzbetreiber angepasst werden. Dieses Frequenzband kann auch als Totband bezeichnet werden.

Eine Regelleistung wird gegenwärtig in Europa ab einer bestimmten maximalen Abweichung der Netzfrequenz (Ist-Wechselstromfrequenz) von der Vorgabefrequenz (Soll-Wechselstromfrequenz), bei einer Abweichung von +/- 200 mHz, in voller Höhe bereitgestellt. In dem Bereich zwischen dem Totband und der maximalen Abweichung soll in Europa nur ein bestimmter Anteil der maximal bereitstellbaren Regelleistung in das Stromnetz eingespeist werden. Die Art der Regelleistungserbringung ist für die vorliegende Erfindung nicht kritisch. Gemäß den in Europa derzeit gültigen Vorschriften ist der Betrag der zu erbringenden Leistung weitgehend linear mit zunehmender Frequenzabweichung von der Vorgabefrequenz zu erhöhen. So wird üblich bei einer Abweichung von 100 mHz eine Regelleistung erbracht, die 50 % der Maximalleistung beträgt. Diese Maximalleistung wird bei einer Abweichung von 200 mHz erbracht und entspricht der zuvor definierten Nennleistung oder kontrahierten Höchstleistung, für die der Energiespeicher mindestens präqualifiziert ist. Bei einer Abweichung von 50 mHz wird demgemäß 25 % der Nennleistung erbracht.

Überraschend kann die Kapazität des Energiespeichers zur Erbringung einer vorgegebenen Regelleistung durch die Verwendung einer Einheit zum Be- und/oder Entladen des Energiespeichers verbessert werden, die dem Energiespeicher bei einer sehr geringen Leistung Energie zur Verfügung stellt.

In diesem Zusammenhang ist festzuhalten, dass durch das Verfahren eine Stabilisierung des Netzes auch bei einer relativ geringen Kapazität des Energiespeichers erreicht werden kann, da eine Regelung auch dann stattfinden kann, falls die Netzfrequenz im Mittel über einen längeren Zeitraum ober- oder unterhalb der Vorgabefrequenz liegt. Hierdurch ist es möglich bei relativ geringer Kapazität des Energiespeichers eine sehr hohe Regelleistung bereitzustellen.

Die Einheit zum Be- und/oder Entladen des Energiespeichers belädt oder entlädt den Energiespeicher mit einer Leistung kleiner oder gleich 20 %, vorzugsweise 10 % der kontrahierten Höchstleistung des Energiespeichers. In diesem Zusammenhang wird hinsichtlich der kontrahierten Höchstleistung des Energiespeichers sowie dessen Präqualifikation auf die zuvor dargelegten Ausführungen Bezug genommen.

Diese Energie kann dem Energiespeicher über einen vorgegebenen Zeitraum, beispielsweise kontinuierlich, oder in Intervallen, beispielsweise über Pulse, zugeführt werden.

Ferner kann vorgesehen sein, dass die Zuführung von Energie in den Energiespeicher oder Entnahme von Energie aus dem Energiespeicher durch eine an den Ladungszustand des Energiespeichers angepasste Regelleistungserbringung erfolgt. Hierdurch kann dieser Ladungszustand in einen optimalen oder idealen Ladezustand überführt werden.

Insbesondere kann vermehrt negative Regelleistung bereitgestellt werden, falls der Ladezustand des Energiespeichers aufgrund einer Netzfrequenz, die im Mittel über einen längeren Zeitraum unterhalb der Vorgabefrequenz liegt, sehr tief ist. Hierbei können Toleranzen, beispielsweise die dem Regelleistungserbringer vom Netzbetreiber zugestandenen Toleranzen, im Hinblick auf die Netzfrequenz, die Höhe der Regelleistung abhängig von der Frequenzabweichung, die Unempfindlichkeit hinsichtlich der Frequenzänderung, und den Zeitraum, innerhalb der die Regelleistung zu erbringen ist, ausgenutzt werden, um den Ladezustand des Energiespeichers an die Erfordernisse anzupassen. So kann anstatt der vorgesehenen negativen Regelleistung beispielsweise mindestens 105%, vorzugsweise mindestens 110 % und besonders bevorzugt mindestens 115 % dieser Regelleistung erbracht werden. Falls bei einem tiefen Ladezustand nun positive Regelleistung bereitgestellt werden muss, so wird in diesem Fall möglichst genau die vertraglich zu erbringende Leistung bereitgestellt. Weiterhin kann die Energieaufnahme bei einem tiefen Ladezustand unmittelbar erfolgen, während die Energieeinspeisung zu einem gemäß den Regularien spätest möglichen Zeitpunkt beziehungsweise mit einem gemäß den Regularien möglichst langsamen Anstieg erfolgt. Weiterhin kann die durch den Netzbetreiber zugestandene Frequenztoleranz verwendet werden, indem eine Messung mit einer höheren Genauigkeit durchgeführt wird, wobei die hierdurch gewonnene Differenz zur zugestandenen Messungenauigkeit gezielt eingesetzt wird, um gemäß den Regularien, d.h. im gegebenen Toleranzrahmen, bei niedrigem Ladezustand möglichst wenig Leistung in das Netz einzuspeisen beziehungsweise möglichst viel Leistung aus dem Netz aufzunehmen. Bei einem hohen Ladezustand kann spiegelverkehrt verfahren werden. So ist eine hohe Energieabgabe bei Bereitstellung einer positiven Regelleistung und eine geringe Energieaufnahme bei Bereitstellung einer negativen Regelleistung möglich oder zu realisieren. Diese Ausgestaltung ist insbesondere in Zusammenhang mit der Art und Weise der Energieeinspeisung geeignet, den Ladezustand des Energiespeichers in einem relativ engen Bereich zu halten, der eine Bereitstellung von negativer und/oder positiver Regelleistung sicherstellt.

Unter der Toleranz bezüglich des Betrags der bereitgestellten Regelleistung und der Toleranz bei der Bestimmung der Frequenzabweichung usw. ist erfindungsgemäß zu verstehen, dass vom Netzbetreiber, aufgrund technischer Rahmenbedingungen, wie der Messgenauigkeit beim Bestimmen der erbrachten Regelleistung oder der Netzfrequenz, gewisse Abweichungen zwischen einer idealen Sollleistung und der tatsächlich erbrachten Regelleistung akzeptiert werden. Die Toleranz kann vom Netzbetreiber gewährt sein, könnte aber auch einer gesetzlichen Vorgabe entsprechen.

Gemäß einer besonderen Ausgestaltung kann die Zuführung von Energie in den Energiespeicher von der Tageszeit abhängig sein. Hierdurch kann eine hohe Stabilität des Netzes auch bei einer hohen Last bei bestimmten Tageszeiten sichergestellt werden. So kann bei Spitzenlasten eine Regeneration des Energiespeichers, die aufgrund der Abweichung der Netzfrequenz von der Vorgabefrequenz über einen längeren Zeitraum sinnvoll wäre, ausgeschlossen werden.

Ferner kann vorgesehen sein, dass mehrere Energiespeicher gemäß dem vorliegenden Verfahren eingesetzt werden. In einer besonderen Ausführungsform können hierbei alle oder nur ein Teil dieser Energiespeicher eine an den Ladungszustand der Energiespeicher angepasste Regelleistung erbringen, wie diese zuvor dargelegt wurde.

Die Größe der Energiespeicher innerhalb des Pools kann dabei variieren. In einer besonders bevorzugten Ausführungsform wird bei den verschiedenen Energiespeichern eines Pools bei der Ausnutzung von Toleranzen, insbesondere der Wahl der Bandbreite im Totband, der Wechsel von einer Parametereinstellung auf eine andere nicht synchron, sondern gezielt zeitlich versetzt vorgenommen, um etwaige Störungen im Netz möglichst gering oder zumindest tolerabel zu halten.

In einer weiteren bevorzugten Ausführungsform variieren die bei den verschiedenen Verfahrensweisen genutzten Toleranzen, insbesondere der Wahl der Bandbreite im Totband abhängig von der Tageszeit, dem Wochentag oder der Jahreszeit. Zum Beispiel können in einem Zeitraum von 5 min vor bis 5 min nach dem Stundenwechsel Toleranzen enger definiert werden. Dies ist darin begründet, dass hier oft sehr rapide Frequenzänderungen stattfinden. Es kann im Interesse der Übertragungsnetzbetreiber liegen, dass hier geringere Toleranzen vorliegen und damit die Regelenergiebereitstellung sicherer im Sinne von schärfer erfolgt.

Gemäß einer weiteren Ausführungsform kann im Rahmen der Vorgaben zur Erbringung von Regelleistung vorgesehen sein, dass durch den Energiespeicher durchschnittlich mehr Energie aus dem Netz aufgenommen als eingespeist wird. Dies kann dadurch erfolgen, dass gemäß den Regularien einschließlich der zuvor dargelegten Verfahrensweise bevorzugt sehr viel negative Regelleistung bereitgestellt wird, wohingegen gemäß den Regularien einschließlich der zuvor dargelegten Vorgehensweise bevorzugt nur die mindestens zugesicherte Leistung an positiver Regelleistung erbracht wird. Vorzugsweise wird durchschnittlich mindestens 0,1 % mehr an Energie aus dem Netz entnommen als eingespeist, insbesondere mindestens 0,2 %, bevorzugt mindestens 0,5 %, besonders bevorzugt mindestens 1,0%, speziell bevorzugt 5%, wobei diese Werte auf einen Durchschnitt bezogen sind, der über einen Zeitraum von mindestens 15 Minuten, vorzugsweise mindestens 4 Stunden, besonders bevorzugt mindestens 24 Stunden und speziell bevorzugt mindestens 7 Tage gemessen wird, und sich auf die eingespeiste Energie beziehen.

Hierbei kann die zuvor dargelegte Regelleistungserbringung eingesetzt werden, um ein Maximum an Energie aus dem Netz zu entnehmen, wobei die maximal mögliche negative Regelleistung bereitgestellt wird, wohingegen nur ein Minimum an positiver Regelleistung erbracht wird.

In den Ausführungsformen zur bevorzugten und speziell zur maximalen Energieaufnahme können die hierdurch aus dem Netz entnommenen Energien über den zuvor beschriebenen Energiehandel verkauft werden, wobei dies vorzugsweise zu Zeitpunkten erfolgt, zu denen ein höchstmöglicher Preis zu erzielen ist. Hierzu können Prognosen über die Preisentwicklung herangezogen werden, die auf historischen Daten beruhen.

Weiterhin kann der Ladezustand des Energiespeichers zum Zeitpunkt eines geplanten Verkaufs an Energie vorzugsweise mindestens 70 %, besonders bevorzugt mindestens 80 % und besonders bevorzugt mindestens 90 % der Speicherkapazität betragen, wobei der Ladezustand nach dem Verkauf bevorzugt höchstens 80 %, insbesondere höchstens 70 % und besonders bevorzugt höchstens 60 % der Speicherkapazität beträgt.

Erfindungsgemäß wird ein Energiespeicher zur Durchführung des Verfahrens eingesetzt, der elektrische Energie aufnehmen und abgeben kann. Die Art des Energiespeichers ist für die Durchführung der vorliegenden Erfindung nicht wesentlich.

Vorzugsweise kann vorgesehen sein, dass als Energiespeicher ein Schwungrad, ein Wärmespeicher, ein Wasserstofferzeuger und -speicher mit Brennstoffzelle, ein Erdgaserzeuger mit Gaskraftwerk, ein Pumpspeicherkraftwerk, ein Druckluftspeicherkraftwerk, ein supraleitender magnetischer Energiespeicher, ein Redox-Flow-Element und/oder ein galvanisches Element verwendet wird, vorzugsweise ein Akkumulator oder Kombinationen ("Pools") von Speichern.

Ein als Energiespeicher betriebener Wärmespeicher muss zusammen mit einer Vorrichtung zur Herstellung von Strom aus der gespeicherten Wärmeenergie betrieben werden.

Zu den Akkumulatoren zählen insbesondere Bleiakkumulatoren, Natrium-Nickelchlorid-Akkumulatoren, Natrium-Schwefel-Akkumulatoren, Nickel-Eisen-Akkumulatoren, Nickel-Cadmium-Akkumulatoren, Nickel-Metallhydrid-Akkumulatoren, Nickel-Wasserstoff-Akkumulatoren, Nickel-Zink-Akkumulatoren, Zinn-Schwefel-Lithium-Ionen-Akkumulatoren, Natrium-Ionen-Akkumulatoren und Kalium-Ionen-Akkumulatoren.

Hierbei sind Akkumulatoren bevorzugt, die einen hohen Wirkungsgrad sowie eine hohe betriebliche und kalendarische Lebensdauer aufweisen. Zu den bevorzugten Akkumulatoren zählen demgemäß insbesondere Lithium-Ionen-Akkumulatoren, wie zum Beispiel Lithium-Polymer-Akkumulatoren, Lithium-Titanat-Akkumulatoren, Lithium-Mangan-Akkumulatoren, Lithium-Eisen-Phosphat-Akkumulatoren , Lithium-Eisen-Mangan-Phosphat-Akkumulatoren, Lithium-Eisen-Yttrium-Phosphat-Akkumulatoren, sowie Weiterentwicklungen dieser, wie zum Beispiel, Lithium-Luft-Akkumulatoren, Lithium-Schwefel-Akkumulatoren und Zinn-Schwefel-Lithium-Ionen-Akkumulatoren.

Insbesondere Akkumulatoren sind aufgrund ihrer schnellen Reaktionszeit, das heißt sowohl die Ansprechzeit als auch die Geschwindigkeit, mit der die Leistung gesteigert oder reduziert werden kann, für erfindungsgemäße Verfahren besonders geeignet. Zudem ist auch der Wirkungsgrad insbesondere bei Li-Ionen-Akkumulatoren gut. Ferner zeigen bevorzugte Akkumulatoren ein hohes Verhältnis von Leistung zu Kapazität, wobei dieser Kennwert als C-Rate bekannt ist.

Auch kann vorgesehen sein, dass in dem Energiespeicher eine Energie von zumindest 4 kWh gespeichert werden kann, vorzugsweise von zumindest 10 kWh, besonders bevorzugt zumindest 50 kWh, ganz besonders bevorzugt zumindest 250 kWh.

Gemäß einer weiteren Ausgestaltung kann der Energiespeicher eine Kapazität von 1 Ah, bevorzugt 10 Ah und besonders bevorzugt 100 Ah besitzen.

Bei Verwendung von Speichern, die auf elektrochemischen Elementen beruhen, insbesondere Akkumulatoren, kann dieser Speicher vorteilhaft mit einer Spannung von mindestens 1V, vorzugsweise mindestens 10V und besonders bevorzugt mindestens 100 V betrieben werden.

Die Einspeisung von Regelleistung in das Wechselstromnetz kann je nach Verlauf der Frequenzabweichung konstant, über Pulse oder über Rampen erfolgen, die sich durch einen Anstieg an Leistungseinspeisung über einen definierten Zeitraum kennzeichnen.

Eine über Pulse (Impulse) bereitgestellte Regelleistung ermöglicht eine Verbesserung des Wirkungsgrades der Vorrichtung und des Verfahrens zur Bereitstellung von Regelleistung, da hierdurch die, insbesondere bei Verwendung von Akkumulatoren, notwendige Leistungselektronik bei einem höheren Wirkungsgrad betrieben werden kann. Unter einem Puls ist ein zeitlich begrenzten stoßartigen Strom-, Spannungs- oder Leistungsverlauf zu verstehen, wobei diese Pulse auch als wiederholende Folge von Impulsen eingesetzt werden können. Der Tastgrad gemäß DIN IEC 60469-1 kann hierbei von der Art der Leistungselektronik und der zu erbringenden Regelleistung gewählt werden, wobei dieser im Bereich von größer null bis 1, vorzugsweise im Bereich von 0,1 bis 0,9, besonders bevorzugt im Bereich von 0,2 bis 0,8 liegt.

Im Fall von erforderlich werdenden Leistungsänderungen kann vorzugsweise vorgesehen sein, dass die Leistung des Energiespeichers abhängig von der Höhe der erforderlichen Leistungsänderung über einen Zeitraum von zumindest 0,5 s gesteigert wird, vorzugsweise über einen Zeitraum von zumindest 2 s, besonders bevorzugt über einen Zeitraum von zumindest 30 s.

Durch diese langsameren Rampen wird sichergestellt, dass es zu keinen Anregungen von unerwünschten Störungen oder Schwingungen im Stromnetz oder bei den angeschlossenen Verbrauchern und Erzeugern durch einen zu steilen Leistungsgradienten kommt.

Der anzustrebende Ladezustand des Energiespeichers kann vorzugsweise im Bereich von 20 bis 80 % der Kapazität liegen, besonders bevorzugt im Bereich von 40 bis 60 %. Dieser Ladezustand kann insbesondere über die Einheit zum Be- und/oder Entladen des Energiespeichers eingestellt werden. Durch den unmittelbaren Zugriff auf diese Einheit kann der Ladezustand in einem relativ engen Fenster gehalten werden, so dass bei einer vergleichbaren Sicherheit und Dauer hinsichtlich der Regelleistungserbringung die Kapazität des Energiespeichers verringert werden kann. Der Ladezustand entspricht insbesondere im Fall von Akkumulatoren als Energiespeicher dem Ladungszustand (engl.: "State-of-Charge", SoC) oder dem Energiegehalt (engl.: "State-of-Energie", SoE).

Der anzustrebende Ladezustand des Energiespeichers kann von Vorhersagedaten abhängen. So können insbesondere Verbrauchsdaten zur Bestimmung des optimalen Ladezustandes herangezogen werden, die von der Tageszeit, dem Wochentag und/oder der Jahreszeit abhängig sind.

Gemäß einer besonderen Ausgestaltung kann die Leistung der Einheit zum Be- und/oder Entladen des Energiespeichers über den Ladezustand des Energiespeichers gesteuert werden. Hierbei bezieht sich diese Leistung auf die Energie, die dem Energiespeicher zugeführt oder entnommen wird.

Es kann auch vorgesehen sein, dass die ans Stromnetz abgegebene Leistung des Energiespeichers oder die aus dem Stromnetz aufgenommene Leistung des Energiespeichers zu mehreren Zeitpunkten, insbesondere kontinuierlich gemessen wird und der Ladezustand des Energiespeichers zu mehreren Zeitpunkten, vorzugsweise kontinuierlich berechnet wird, wobei die abgegebene oder aufgenommene Leistung des Energiespeichers in Abhängigkeit von diesem Ladezustand über eine angepasste Regelleistungserbringung des Energiespeichers erbracht wird, wie diese zuvor dargelegt wurde.

Zur Durchführung des erfindungsgemäßen Verfahrens wird mindestens eine Einheit zum Be- und/oder Entladen des Energiespeichers eingesetzt. Diese Einheiten zum Be- und/oder Entladen des Energiespeichers sind in diesem Zusammenhang Vorrichtungen, die dem Energiespeicher Energie zuführen oder entnehmen können, die jedoch keinen Energiespeicher darstellen. Zu den Einheiten zum Be- und/oder Entladen des Energiespeichers zählen insbesondere Energieerzeuger und Energieverbraucher.

Es kann erfindungsgemäß vorgesehen sein, dass als Energieerzeuger ein Generator, beispielsweise ein Dieselgenerator, ein Kraftwerk, vorzugsweise ein Kohlekraftwerk, ein Gaskraftwerk oder ein Wasserkraftwerk verwendet wird und/oder als Energieverbraucher eine Werk zum Herstellen einer Substanz verwendet wird, insbesondere ein Elektrolyse-Werk oder ein Metall-Werk, vorzugsweise ein Aluminium-Werk oder ein Stahlwerk.

Solche Energieerzeuger und Energieverbraucher sind zum Einstellen des Ladezustandes des Energiespeichers gut geeignet. Ihre Trägheit stellt erfindungsgemäß keinen Hinderungsgrund dar, wenn sie geeignet mit dynamischen Speichern kombiniert werden.

Hierbei sind insbesondere Einheiten zum Be- und/oder Entladen des Energiespeichers bevorzugt, die auch im Zusammenhang mit Erneuerbaren Energien eingesetzt werden können, wie beispielsweise Elektrolyse-Werke oder Metall-Werke, deren Produktion zum Beladen des Energiespeichers verringert werden kann.

Gemäß einer besonderen Ausführungsform können zum Zuführen oder Entnehmen von Energie in beziehungsweise aus dem Energiespeicher Energieverbraucher oder Energieerzeuger mit einer geringen Nennleistung eingesetzt werden. Hierbei weisen Energieverbraucher oder Energieerzeuger mit einer geringen Nennleistung vorzugsweise eine Leistung auf, die höchstens 200 %, vorzugsweise höchstens 100 %, besonders bevorzugt höchstens 50 % der kontrahierten Höchstleistung des Energiespeichers beträgt.

Je nach Art des Energiespeichers kann die Einheit zum Be- oder Entladen des Energiespeichers eine Nennleistung aufweisen, die mindestens 1 kW, vorzugsweise mindestens 10 kW, besonders bevorzugt mindestens 100 kW aufweist. Bei einem Pool von Energiespeichern oder bei besonders großen Energiespeichern kann diese Leistung auch wesentlich höher liegen, beispielsweise mindestens 1 MW betragen.

Ferner können diese Einheiten zum Be- und/oder Entladen des Energiespeichers mit einer hohen Leistung betrieben werden, wobei erfindungsgemäß im Allgemeinen lediglich ein geringer Teil dieser Energie zum Einstellen des Ladezustandes des Energiespeichers verwendet wird. Energieverbraucher oder Energieerzeuger mit einer hohen Nennleistung, die als Einheiten zum Be- und/oder Entladen des Energiespeichers eingesetzt werden können, weisen bevorzugt eine Leistung auf, die mindestens 200 %, vorzugsweise mindestens 250 %, besonders bevorzugt mindestens 500 % der kontrahierten Höchstleistung des Energiespeichers beträgt. Hierdurch ist es möglich die Energieerzeuger und/oder Energieverbraucher bei einem sehr hohen Wirkungsgrad zu betreiben, da nur ein sehr geringer Teil der Nennleistung der Energieerzeuger und/oder Energieverbraucher zur Einstellung des Ladezustandes des Energiespeichers benötigt wird.

In einer weiteren Ausführungsform kann vorgesehen sein, dass das Verfahren zusätzlich mit einem Regelleistungserbringer durchgeführt wird, der in der Lage ist, einen höheren Anteil an Energie dem Stromnetz und/oder dem Energiespeicher zuzuführen oder zu entnehmen als die Einheit zum Be- und/oder Entladen des Energiespeichers. Diese Einheit ist demgemäß geeignet, Regelenergie beziehungsweise Regelleistung bereitzustellen.

Regelleistungserbringer sind in diesem Zusammenhang Vorrichtungen, die Regelleistung bereitstellen können, die jedoch kein Energiespeicher darstellen. Zu den Regelleistungserbringern zählen insbesondere Energieerzeuger und Energieverbraucher, wobei Ausführungsbeispiele dieser Komponenten zuvor dargelegt wurden.

In dieser Ausführungsform kann vorgesehen sein, dass der Energieerzeuger und/oder der Energieverbraucher einzeln oder im Pool eine Leistung von zumindest 100 kW hat oder haben, vorzugsweise zumindest 1 MW, besonders bevorzugt zumindest 10 MW.

Das Verhältnis von Nennleistung des Energiespeichers zur maximalen Leistung des Regelleistungslieferanten kann vorzugsweise im Bereich von 1:10000 bis 10:1, besonders bevorzugt im Bereich von 1:1000 bis 1:1 liegen.

Mit diesen Leistungen kann eine Regelenergiequelle auch für ein großes Stromnetz noch vernünftig betrieben werden.

Durch eine Kombination von Regelleistungserbringer mit einem Energiespeicher kann insbesondere eine dauerhafte Bereitstellung von Regelleistung erzielt werden, ohne dass eine Limitierung hinsichtlich eines Ladezustandes oder einer Kapazität des Energiespeichers besteht. So kann bei einer geringfügigen Abweichung des Mittelwertes von der Vorgabefrequenz der Regelleistungserbringer die Energie in den Energiespeicher zu- oder abführen, die der Energiespeicher aufgrund dieser Abweichung in das Netz eingespeist oder aus den Netz entnommen hat, um eine Regelung auf die Vorgabefrequenz zu bewirken. Dies erfordert im Allgemeinen relativ geringe Energien. Bei einer dauerhaften Abweichung der Netzfrequenz, insbesondere über längere Zeiten, die mindestens 10 Minuten, vorzugsweise mindestens 15 Minuten und speziell bevorzugt mindestens 30 Minuten betragen, kann der Regelleistungslieferant den Energiespeicher zumindest teilweise ersetzen.

So kann trotz einer relativ hohen Trägheit der Regelleistungslieferanten eine qualitativ hochwertige Regelleistung über den sehr schnell ansprechbaren Energiespeicher erbracht werden. Bei einer langfristigen Abweichung kann der Regelleistungslieferant die zugesagte Regelleistung vollständig erbringen, beispielsweise bis die Netzfrequenz eine Regeneration des Energiespeichers, also eine Be- oder Entladung desselben auf einen optimalen oder idealen Ladungszustand erlaubt.

Hierbei sind insbesondere Regelleistungserbringer bevorzugt, die in Zusammenhang mit Erneuerbaren Energien eingesetzt werden können, wie beispielsweise Elektrolyse-Werke oder Metall-Werke, deren Produktion zur Bereitstellung von positiver Regelleistung verringert werden kann.

Durch diese Ausgestaltung kann überraschend die Nennleistung des Energiespeichers gesteigert werden, ohne dass die Kapazität desselben vergrößert werden muss. Hierbei kann dem Energiespeicher Regelleistung durch den Regelleistungserbringer auch bei einer hohen Netzbelastung in sehr kurzer Zeit bei Bedarf bereitgestellt, ohne dass ein langwieriger Energiehandel notwendig ist. Überraschend kann daher bei einer relativ geringen Kapazität eine relativ hohe Leistung abgegeben werden, die im Allgemeinen nur für einen kurzen Zeitraum abgegeben werden kann. Durch den unmittelbaren Zugriff auf den Regelleistungserbringer kann dieser nach einer kurzen Zeit die eigentlich vom Energiespeicher zur Verfügung zu stellende Regelleistung erbringen. So kann insbesondere eine Regeneration des Energiespeichers durch die Energie oder Leistung des Regelleistungserbringers erfolgen. Hierbei trägt der Energiespeicher zur Qualität der Regelleistung bei, da hierdurch eine schnelle Reaktionszeit erzielt wird. Im Gegensatz hierzu trägt der Regelleistungserbringer zur Quantität bei, da dieser bei relativ geringen Kosten über eine bauartbedingt unbestimmte, deutlich längere Zeit Regelleistung liefern kann.

Das Verfahren der vorliegenden Erfindung kann bevorzugt mit einer Vorrichtung durchgeführt werden, die eine Steuerung und einen Energiespeicher umfasst, wobei die Vorrichtung an ein Stromnetz angeschlossen ist und die Steuerung mit dem Energiespeicher verbunden ist, wobei die Steuerung mit einer Einheit zum Be- und/oder Entladen des Energiespeichers und einer Einheit zur Bestimmung der Energie, die dem Energiespeicher zuzuführen oder zu entnehmen ist, verbunden ist.

Dabei kann vorgesehen sein, dass die Vorrichtung einen Frequenzmesser zum Messen der Netzfrequenz des Stromnetzes und einen Speicher umfasst, wobei in dem Speicher zumindest ein Grenzwert der Netzfrequenz (beispielsweise Vorgabefrequenz +/- 10 mHz, Vorgabefrequenz +/- 200 mHz usw.) gespeichert ist, wobei die Steuerung dazu ausgelegt ist, die Netzfrequenz mit dem zumindest einen Grenzwert zu vergleichen und in Abhängigkeit von dem Vergleich die Leistung des Energiespeichers sowie der Einheit zum Be- und/oder Entladen des Energiespeichers, insbesondere des Energieverbrauchers und/oder des Energieerzeugers zu steuern.

Unter einer Steuerung wird erfindungsgemäß vorliegend eine einfache Steuerung verstanden. Hierbei sei angemerkt, dass jede Regelung eine Steuerung umfasst, da bei einer Regelung eine Steuerung in Abhängigkeit von einer Differenz eines Istwerts zu einem Sollwert erfolgt. Bevorzugt ist die Steuerung also als Regelung ausgebildet, insbesondere bezüglich des Ladezustands. Besonders bevorzugt ist die Steuerung ein Leitsystem.

Ferner kann vorgesehen sein, dass die Vorrichtung einen Datenspeicher aufweist, wobei der Datenspeicher zumindest historische Daten über die Abweichung und die Dauer der Netzfrequenz von der Vorgabefrequenz festgehalten sind, wobei diese historischen Daten einen Zeitraum von vorzugsweise mindestens einem Tag, bevorzugt mindestens einer Woche, besonders bevorzugt mindestens einem Monat und speziell bevorzugt mindestens einem Jahr umfassen. Dieser Speicher kann insbesondere zur Festlegung des optimalen Ladezustandes des Energiespeichers dienen.

Die Einheit zum Be- und/oder Entladen des Energiespeichers kann einer oder mehrerer der zuvor dargelegten Energieverbraucher und/oder Energielieferanten umfassen. Bevorzugt ist insbesondere ein Energieverbraucher, der drosselbar ist, so dass die im Allgemeinen über das Stromnetz dem Energieverbraucher bereitgestellte Leistung im Bedarfsfall teilweise zur Regenerierung des Energiespeichers herangezogen werden kann.

Diese Ausführungsform kann beispielsweise bei Einsatz von drosselbaren Verbrauchern zweckmäßig sein, deren Leistungsaufnahme sehr hoch ist, wobei ein relativ geringer Teil dieser Leistung zum Be- oder Entladen des Energiespeichers eingesetzt werden kann. In dieser Ausführungsform kann der Verbraucher bei einem sehr hohen Wirkungsgrad betrieben werden und gleichzeitig die zuvor dargelegten Verbesserungen hinsichtlich der Regelleistungserbringung durch den Energiespeicher bewirken.

Ferner kann die Vorrichtung eine Einheit zur Bestimmung der Energie, die dem Energiespeicher zuzuführen oder zu entnehmen ist, aufweisen. Diese Einheit umfasst im Allgemeinen einen Ladezustandsmesser, der den Ladezustand des Energiespeichers misst, wobei der Ladezustand bei Erreichen von zuvor definierten Grenzwerten an die zuvor dargelegten optimalen Werte angepasst wird.

Im Folgenden werden Ausführungsbeispiele der Erfindung anhand einer schematisch dargestellten Figur erläutert, ohne jedoch dabei die Erfindung zu beschränken. Dabei zeigt:

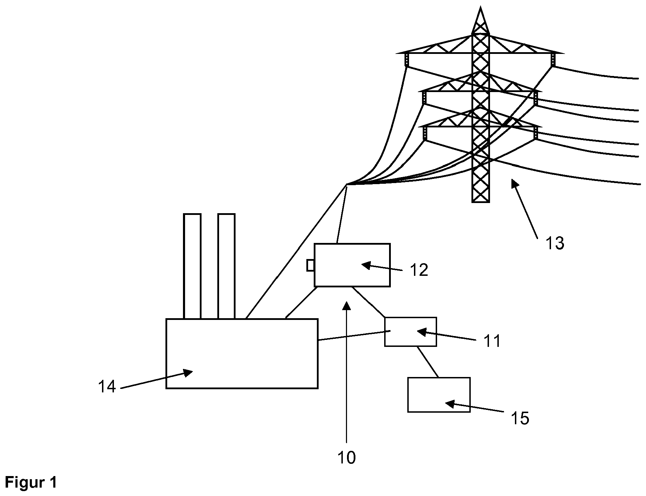

- Figur 1:: eine schematische Darstellung einer erfindungsgemäßen Vorrichtung zur Bereitstellung von Regelleistung.

Figur 1 zeigt einen schematischen Aufbau einer bevorzugten Ausführungsform einer erfindungsgemäßen Vorrichtung 10 für ein erfindungsgemäßes Verfahren umfassend eine Steuerung 11 und einen Energiespeicher 12, wobei die Vorrichtung an ein Stromnetz 13 angeschlossen ist.

Insbesondere auch in solchen Fällen ist ein besonders schnell reagierender und leicht auf- und entladbarer Energiespeicher 12 besonders vorteilhaft. Am besten sind hierfür Akkumulatoren geeignet. Insbesondere Li-Ionen-Akkumulatoren sind mit geringen schädlichen Einflüssen auf den Akkumulator schnell und häufig auf- und entladbar, so dass diese erfindungsgemäß für alle Ausführungsbeispiele besonders geeignet und bevorzugt sind. Dazu müssen Li-Ionen-Akkumulatoren mit beträchtlicher Kapazität bereitgestellt werden. Diese sind beispielsweise leicht in einem oder mehreren 40-Fuß-ISO-Containern unterzubringen.

Hierbei ist die Steuerung 11 mit dem Energiespeicher 12 verbunden. Weiterhin ist die Steuerung 11 mit einer Einheit zum Be- und/oder Entladen des Energiespeichers 14 und einer Einheit zur Bestimmung der Energie, die dem Energiespeicher zuzuführen oder zu entnehmen ist 15, verbunden. Die Verbindung zwischen der Einheit zum Be- und/oder Entladen des Energiespeichers 14 und der Einheit zur Bestimmung der Energie, die dem Energiespeicher zuzuführen oder zu entnehmen ist 15 mit der Steuerung 11 erlaubt eine Kommunikation der ermittelten Daten, die in der Steuerungseinheit verarbeitet werden. Ferner kann die Steuerung 11 mit dem Stromnetz 13 verbunden sein, wobei diese in Figur 1 nicht dargestellte Verbindung einer Übermittlung von Anfragen nach benötigter Regelleistung, sowohl positiver als auch negativer, erlauben kann. Vorzugsweise kann die Einheit zum Be- und/oder Entladen des Energiespeichers 14 mit dem Stromnetz 13 in Verbindung stehen, wie dies in Figur 1 schematisch dargestellt ist. Diese Ausführungsform ist insbesondere bei Einsatz von drosselbaren Verbrauchern zweckmäßig, deren Leistungsaufnahme sehr hoch sein kann, wobei ein relativ geringer Teil dieser Leistung zum Be- oder Entladen des Energiespeichers eingesetzt werden kann. In dieser Ausführungsform kann der Verbraucher bei einem sehr hohen Wirkungsgrad betrieben werden und gleichzeitig die zuvor dargelegten Verbesserungen hinsichtlich der Regelleistungserbringung durch den Energiespeicher bewirken.

Für Einzelheiten zur Regelung von Regelleistung und zum Informationsaustausch mit den Netzbetreibern sei auf das Forum Netztechnik/Netzbetrieb im VDE (FNN) "TransmissionCode 2007" vom November 2009 verwiesen.

## Patentansprüche

1. Verfahren zur Erbringung von Regelleistung zur Stabilisierung eines Wechselstromnetzes, wobei das Wechselstromnetz bei einer Vorgabefrequenz arbeitet, umfassend einen Energiespeicher, der elektrische Energie aufnehmen und abgeben kann, **dadurch gekennzeichnet, dass** der Energiespeicher mit mindestens einer Einheit zum Be- und/oder Entladen des Energiespeichers verbunden ist, wobei die Einheit zum Be- und/oder Entladen des Energiespeichers dem Energiespeicher Energie mit einer Leistung von höchstens kleiner oder gleich 20 % der kontrahierten Höchstleistung, also der dem Betreiber des Wechselstromnetzes maximal zur Verfügung gestellte Nennleistung des Energiespeichers, entzieht oder zuführt, und wobei es sich bei der mindestens einen Einheit um einen Energieerzeuger und/oder um einen Energieverbraucher handelt, der dem Energiespeicher Energie zuführen oder entnehmen kann, ohne jedoch selbst einen Energiespeicher darzustellen.

2. Verfahren gemäß Anspruch 1, **dadurch gekennzeichnet, dass** die Einheit zum Be- und/oder Entladen des Energiespeichers dem Energiespeicher Energie mit einer Leistung von höchstens kleiner oder gleich 10 % der kontrahierten Höchstleistung des Energiespeichers entzieht oder zuführt.

3. Verfahren gemäß Anspruch 1 oder 2, **dadurch gekennzeichnet, dass** die Zuführung von Energie in den Energiespeicher oder Entnahme von Energie aus dem Energiespeicher durch eine an den Ladezustand des Energiespeichers angepasste Regelleistungserbringung erfolgt.

4. Verfahren gemäß mindestens einem der vorhergehenden Ansprüche, **dadurch gekennzeichnet, dass** die Einheit zum Be- und/oder Entladen des Energiespeichers ein Energieerzeuger ist.

5. Verfahren gemäß mindestens einem der vorhergehenden Ansprüche, **dadurch gekennzeichnet, dass** die Einheit zum Be- und/oder Entladen des Energiespeichers ein Energieverbraucher ist, dessen Leistung vermindert wird, um dem Energiespeicher Energie bereitzustellen.

6. Verfahren gemäß mindestens einem der vorhergehenden Ansprüche, **dadurch gekennzeichnet, dass** der Energiespeicher ein Akkumulator ist.

7. Verfahren gemäß Anspruch 6, **dadurch gekennzeichnet, dass** der Akkumulator ein Lithium-Ionen-Akkumulator ist.

8. Verfahren gemäß mindestens einem der vorhergehenden Ansprüche, **dadurch gekennzeichnet, dass** die Leistung der Einheit zum Be- und/oder Entladen des Energiespeichers über den Ladezustand des Energiespeichers gesteuert wird.

9. Verfahren gemäß mindestens einem der vorhergehenden Ansprüche, **dadurch gekennzeichnet, dass** im Rahmen der Vorgaben zur Erbringung von Regelleistung durchschnittlich mehr Energie aus dem Netz aufgenommen als eingespeist wird.

10. Vorrichtung zur Durchführung eines Verfahrens gemäß den Ansprüchen 1 bis 9, wobei die Vorrichtung (10) eine Steuerung (11) und einen Energiespeicher (12) umfasst, die Vorrichtung an ein Stromnetz (13) angeschlossen ist und die Steuerung (11) mit dem Energiespeicher (12) verbunden ist, wobei die Steuerung (11) mit einer Einheit zum Be- und/oder Entladen des Energiespeichers (14) und einer Einheit zur Bestimmung der Energie, die dem Energiespeicher zuzuführen oder zu entnehmen ist (15), verbunden ist, **dadurch gekennzeichnet, dass** die Einheit zum Be- und/oder Entladen des Energiespeichers ein Energieverbraucher ist, dessen Leistungsaufnahme drosselbar ist.

## Claims

1. Method for delivering control power to stabilize an AC electricity network, the AC electricity network operating at a set frequency, comprising an energy store that can take up and deliver electrical energy, **characterized in that** the energy store is connected to at least one unit for charging and/or discharging the energy store, the unit for charging and/or discharging the energy store drawing energy from the energy store or supplying energy to the energy store with a power of at most less than or equal to 20% of the contracted maximum power, that is to say the rated power of the energy store made available as a maximum to the operator of the AC electricity network, and the at least one unit being an energy generator and/or an energy consuming entity, which can supply energy to the energy store or remove energy from the energy store without itself being an energy store.

2. Method according to Claim 1, **characterized in that** the unit for charging and/or discharging the energy store draws energy from the energy store or supplies energy to the energy store with a power of at most less than or equal to 10% of the contracted maximum power of the energy store.

3. Method according to Claim 1 or 2, **characterized in that** the supplying of energy into the energy store or removal of energy from the energy store is performed by a delivery of control power that is adapted to the state of charge of the energy store.

4. Method according to at least one of the preceding claims, **characterized in that** the unit for charging and/or discharging the energy store is an energy generator.

5. Method according to at least one of the preceding claims, **characterized in that** the unit for charging and/or discharging the energy store is an energy consuming entity, the power of which is reduced in order to provide energy to the energy store.

6. Method according to at least one of the preceding claims, **characterized in that** the energy store is a rechargeable battery.

7. Method according to Claim 6, **characterized in that** the rechargeable battery is a lithium-ion battery.

8. Method according to at least one of the preceding claims, **characterized in that** the power of the unit for charging and/or discharging the energy store is controlled by way of the charging state of the energy store.

9. Method according to at least one of the preceding claims, **characterized in that**, within the provisions for delivering control power, on average more energy is taken up from the network than is fed in.

10. Device for carrying out a method according to Claims 1 to 9, the device (10) comprising a control system (11) and an energy store (12), the device being connected to an electricity network (13) and the control system (11) being connected to the energy store (12), the control system being connected to a unit for charging and/or discharging the energy store (14) and a unit for determining the energy that is to be supplied to or removed from the energy store (15), **characterized in that** the unit for charging and/or discharging the energy store is an energy consuming entity, the power take-up of which can be restricted.

## Revendications

1. Procédé pour fournir une puissance de régulation en vue de stabiliser un réseau de courant alternatif, le réseau de courant alternatif fonctionnant à une fréquence de consigne, comprenant un réservoir d'énergie qui peut absorber et délivrer de l'énergie électrique, **caractérisé en ce que** le réservoir d'énergie est relié à au moins une unité servant à charger et/ou décharger le réservoir d'énergie, l'unité servant à charger et/ou décharger le réservoir d'énergie prélevant ou acheminant du/au réservoir d'énergie de l'énergie avec une puissance maximale inférieure ou égale à 20 % de la puissance maximale contractuelle, c'est-à-dire à la puissance nominale du réservoir d'énergie maximale mise à disposition de l'exploitant du réseau de courant alternatif, et l'au moins une unité étant un générateur d'énergie et/ou un consommateur d'énergie qui peut acheminer de l'énergie au réservoir d'énergie ou lui en prélever, sans toutefois représenter lui-même un réservoir d'énergie.

2. Procédé selon la revendication 1, **caractérisé en ce que** l'unité servant à charger et/ou décharger le réservoir d'énergie prélève ou achemine du/au réservoir d'énergie de l'énergie avec une puissance maximale inférieure ou égale à 10 % de la puissance maximale contractuelle du réservoir d'énergie.

3. Procédé selon la revendication 1 ou 2, **caractérisé en ce que** l'acheminement d'énergie dans le réservoir d'énergie ou le prélèvement d'énergie du réservoir d'énergie s'effectue par une fourniture de puissance de régulation adaptée à l'état de charge du réservoir d'énergie.

4. Procédé selon au moins l'une des revendications précédentes, **caractérisé en ce que** l'unité servant à charger et/ou décharger le réservoir d'énergie est un générateur d'énergie.

5. Procédé selon au moins l'une des revendications précédentes, **caractérisé en ce que** l'unité servant à charger et/ou décharger le réservoir d'énergie est un consommateur d'énergie dont la puissance est réduite en vue de délivrer de l'énergie au réservoir d'énergie.

6. Procédé selon au moins l'une des revendications précédentes, **caractérisé en ce que** le réservoir d'énergie est un accumulateur.

7. Procédé selon la revendication 6, **caractérisé en ce que** l'accumulateur est un accumulateur aux ions de lithium.

8. Procédé selon au moins l'une des revendications précédentes, **caractérisé en ce que** la puissance de l'unité servant à charger et/ou décharger le réservoir d'énergie est commandée par le biais de l'état de charge du réservoir d'énergie.

9. Procédé selon au moins l'une des revendications précédentes, **caractérisé en ce que** dans le cadre des consignes de fourniture de puissance de régulation, la quantité d'énergie prélevée du réseau est en moyenne plus élevée que celle qui y est injectée.

10. Dispositif pour mettre en oeuvre un procédé selon les revendications 1 à 9, le dispositif (10) comportant une commande (11) et un réservoir d'énergie (12), le dispositif étant raccordé à un réseau électrique (13) et la commande (11) étant reliée au réservoir d'énergie (12), la commande (11) étant reliée à une unité servant à charger et/ou décharger le réservoir d'énergie (14) et à une unité servant à déterminer la quantité d'énergie qui doit être acheminée au réservoir d'énergie ou qui doit en être prélevée (15), **caractérisé en ce que** l'unité servant à charger et/ou décharger le réservoir d'énergie est un consommateur d'énergie dont la puissance consommée peut être restreinte.
